# EUROPEAN PATENT APPLICATION

(11) **EP 4 488 616 A1**
(43) Date of publication of application: **08.01.2025**
(21) Application number: 23760217.2
(22) Date of filing: 28.02.2023
(51) Int. Cl.: G01B 11/00, B25J 13/08, G06T 7/00, G06T 7/593, G06T 7/70, G06V 10/44

(54) **INFORMATION PROCESSING DEVICE, ROBOT CONTROL SYSTEM, AND PROGRAM**

(30) Priority: 28.02.2022 JP 2022029790
(71) Applicant: Kyocera Corporation, Kyoto-shi, Kyoto 612-8501 (JP)
(72) Inventor: MIYAMOTO Takuya, Kyoto-shi, Kyoto 612-8501 (JP); BUNNO Sho, Kyoto-shi, Kyoto 612-8501 (JP); MIYAMURA Hiroaki, Kyoto-shi, Kyoto 612-8501 (JP); ISHIDA Takayuki, Kyoto-shi, Kyoto 612-8501 (JP)
(74) Representative: TBK
(86) International application number: PCT/JP2023/007351
(87) International publication number: WO 2023/163219

(57) **Abstract**

An information processing device includes an obtainer and a generator. The obtainer obtains depth information indicating a depth in a measurement space. The measurement space includes a plurality of objects. The generator generates high-position information indicating a high portion of the plurality of objects at a higher position than another portion of the plurality of objects in the measurement space by performing, on the depth information, filtering corresponding to an object size of an object of the plurality of objects.

## Description

### TECHNICAL FIELD

The present disclosure relates to an information processing technique.

### BACKGROUND OF INVENTION

Patent Literature 1 describes a technique for identifying objects at high positions in a pile of objects.

### CITATION LIST

### PATENT LITERATURE

Patent Literature 1: Japanese Unexamined Patent Application Publication No. 2016-148558

### SUMMARY

One or more aspects are directed to an information processing device, a robot control system, and a program. In one embodiment, the information processing device includes an obtainer and a generator. The obtainer obtains depth information indicating a depth in a measurement space. The measurement space includes a plurality of obj ects. The generator generates high-position information indicating a high portion of the plurality of objects at a higher position than another portion of the plurality of objects in the measurement space by performing, on the depth information, filtering corresponding to an object size of an object of the plurality of objects.

In one embodiment, the robot control system includes the obtainer and the generator included in the above information processing device, an identifier, a degree obtainer, a holding object determiner, a holding posture determiner, and a robot controller. The identifier identifies, for each of a plurality of candidate objects, an object image of the candidate object in a captured image of the measurement space based on the high-position information. Each of the plurality of candidate objects is, among the plurality of obj ects, an object including a partial high portion included in the high portion. The degree obtainer calculates, based on the depth information, a degree of holdability of each of the plurality of candidate objects. The holding object determiner determines, based on the degree of each of the plurality of candidate objects, a holding object to be held by a robot among the plurality of candidate objects. The holding posture determiner determines, based on the object image, a holding posture of the robot relative to the holding object. The robot controller controls the robot based on the holding posture determined by the holding posture determiner.

In one embodiment, the program causes a computer to obtain depth information indicating a depth in a measurement space. The measurement space includes a plurality of objects. The program also causes the computer to generate high-position information indicating a high portion of the plurality of objects at a higher position than another portion of the plurality of objects in the measurement space by performing, on the depth information, filtering corresponding to an object size of an object of the plurality of objects on the depth information.

### BRIEF DESCRIPTION OF THE DRAWINGS

FIG. 1 is a schematic diagram of an example robot system.
FIG. 2 is a block diagram of an example information processing device.
FIG. 3 is a block diagram of an example controller in the information processing device.
FIG. 4 is a flowchart of an example operation of the information processing device.
FIG. 5 is a schematic diagram of an example filter window.
FIG. 6 is a schematic diagram of the filter window being set on a depth image in an example.
FIG. 7 is a schematic diagram describing an example of filtering.
FIG. 8 is a schematic diagram describing an example of filtering.
FIG. 9 is a schematic diagram describing an example of filtering.
FIG. 10 is a schematic diagram describing an example of filtering.
FIG. 11 is a schematic diagram describing an example of filtering.
FIG. 12 is a schematic diagram describing an example of filtering.
FIG. 13 is a schematic diagram describing an example method for identifying an object image.
FIG. 14 is a schematic diagram describing an example method for calculating the degree of holdability.
FIG. 15 is a schematic diagram of an example filter window.
FIG. 16 is a schematic diagram of an example filter window.
FIG. 17 is a schematic diagram of an example filter window.
FIG. 18 is a schematic diagram of an example filter window.
FIG. 19 is a schematic diagram describing an example operation of an identifier.

### DESCRIPTION OF EMBODIMENTS

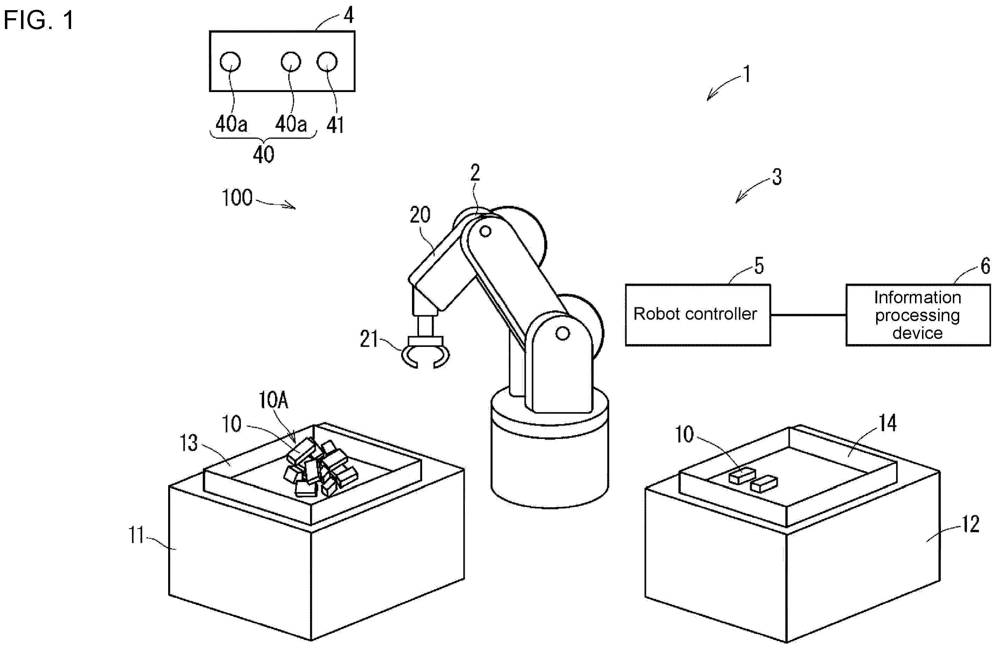

FIG. 1 is a schematic diagram of an example of a robot system 1. The robot system 1 includes, for example, a robot 2 and a robot control system 3 that controls the robot 2. The robot control system 3 includes, for example, a sensor device 4 that detects the state of a measurement space 100 as a target measurement space, a robot controller 5 that controls the robot 2, and an information processing device 6. The information processing device 6 generates information for robot control performed by the robot controller 5 based on a detection result obtained by the sensor device 4.

The robot 2 can transfer, for example, an object 10 from a work start table 11 to a work target table 12. The object 10 is also referred to as a work target or a workpiece. The robot controller 5 controls the robot 2 to transfer the object 10 from the work start table 11 to the work target table 12. The robot 2 includes, for example, an arm 20 and an end-effector 21 for holding the object 10. The robot 2 moves the arm 20, with the end-effector 21 holding the object 10, to transfer the object 10 from the work start table 11 to the work target table 12. The robot controller 5 can control the arm 20 and the end-effector 21. The end-effector 21 may hold the object 10 by gripping the object 10, by sucking the object 10, or with another method. The end-effector 21 may grip the object 10 with two fingers or with two or more fingers.

A tray 13 is on the work start table 11, and a tray 14 is on the work target table 12. Multiple objects 10 are randomly piled on the tray 13. For example, the robot 2 holds the objects 10 on the tray 13 one by one and transfers each of the objects 10 to the work target table 12 to arrange the objects 10 onto the tray 14. The multiple objects 10 on the tray 13 may be hereafter collectively referred to as an object group 10A.

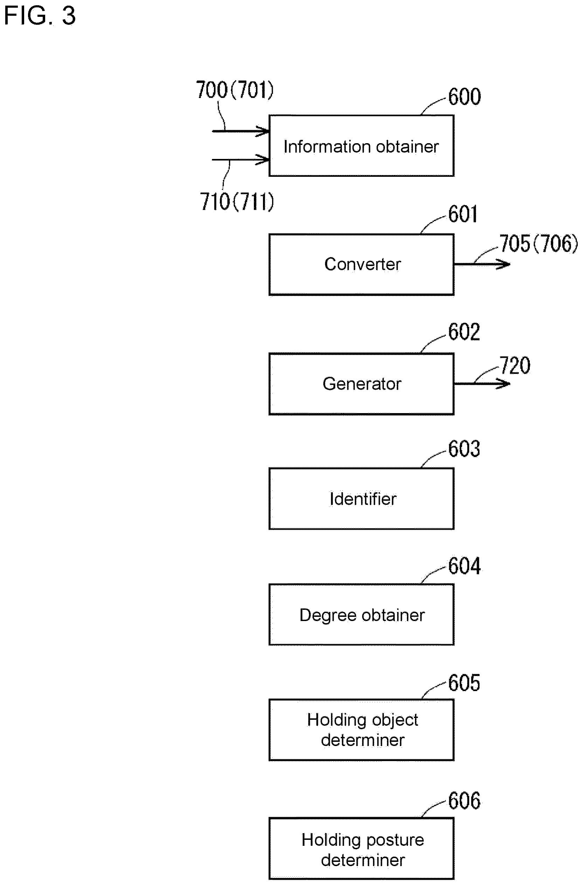

The multiple objects 10 randomly piled on the tray 13 are in the measurement space 100 of the sensor device 4. The sensor device 4 can detect the depth and the color in the measurement space 100. The sensor device 4 can obtain depth information 700 (refer to FIG. 3 described later) indicating the depth in the measurement space 100 and color information 710 (refer to FIG. 3 described later) in the measurement space 100. The sensor device 4 includes, for example, a depth sensor 40 that obtains the depth information 700 and a camera 41 that captures an image of the measurement space 100 to obtain the color information 710 in the measurement space 100.

The depth sensor 40 generates the depth information 700 with, for example, a stereo method. The depth sensor 40 includes, for example, a stereo camera including multiple cameras 40a that each capture an image of the measurement space 100. Each of the multiple cameras 40a captures an image of the object group 10A on the tray 13 from above the tray 13. The depth sensor 40 generates the depth information 700 based on image data obtained by the multiple cameras 40a. The depth sensor 40 generates the depth information 700 based on, for example, the principle of triangulation. The depth sensor 40 generates, as the depth information 700, depth image data representing a depth image 701 (refer to FIG. 3 described later). The depth image 701 represents depths to multiple measurement points in the measurement space 100. The measurement points are on the surfaces of the objects in the measurement space 100. The multiple measurement points include a measurement point on a surface of the tray 13 being an object in the measurement space 100 and a measurement point on a surface of the object group 10A on the tray 13. The depth image 701 represents the depths to the objects in the measurement space 100. The depth information 700 indicates the depths to the measurement points as viewed from the depth sensor 40 (specifically, the stereo camera). The depth information 700 may be hereafter referred to as depth image data 700.

The depth image data 700 includes the pixel values of multiple pixels in the depth image 701. The multiple pixels in the depth image 701 correspond to the respective measurement points in the measurement space 100. The pixel value of a pixel in the depth image 701 corresponds to the measurement point corresponding to the pixel. The pixel values included in the depth image data 700 represent the depths to the respective measurement points, or in other words, the depths to the objects 10. In other words, each of the pixel values included in the depth image data 700 is also the depth information indicating the depth to a measurement point. Each of the pixel values included in the depth image data 700 is, for example, a value greater than or equal to zero. For example, a pixel value is greater when the depth to the corresponding measurement point is smaller. In the depth image data 700, for each of the multiple pixels in the depth image 701 represented by the depth image data 700, position information indicating the position of the pixel and the pixel value of the pixel are associated with each other.

Note that the depth sensor 40 may generate the depth information 700 with a method other than the stereo method. The depth information 700 may be generated with, for example, a projector method, the stereo method and the projector method in combination, or a time-of-flight (ToF) method.

The camera 41 is a color camera that generates, as the color information 710 in the measurement space 100, color image data representing a color image 711 (refer to FIG. 3 described later) of the measurement space 100. The color information 710 may be hereafter referred to as color image data 710. The color image 711 is a captured image of the measurement space 100.

The color image 711 includes, for example, an image of the tray 13 and an image of the object group 10A on the tray 13. In the color image data 710, for each of the multiple pixels in the color image 711 represented by the color image data 710, pixel position information indicating the position of the pixel and the pixel value of the pixel are associated with each other. The multiple pixels in the color image 711 correspond to the respective measurement points in the measurement space 100. The pixel value of a pixel in the color image 711 corresponds to the measurement point corresponding to the pixel. In other words, each of the pixel values included in the color image data 710 is also color information indicating the color at the corresponding measurement point. The pixel values included in the color image data 710 include, for example, a red component (R component), a green component (G component), and a blue component (B component). The color image data 710 is also referred to as RGB image data.

The pixel position of a pixel in an image is herein indicated with (m, n). A position indicated with m is, for example, a position in a row direction (in other words, a lateral direction). A position indicated with n is, for example, a position in a column direction (in other words, a vertical direction). An image includes multiple pixels in N rows and M columns. The leftmost column in the image is the 0th column, the rightmost column in the image is the (M - 1)th column, the uppermost row is the 0th row, and the lowermost row in the image is the (N - 1)th row. The column number is indicated with m that is an integer satisfying 0 ≤ m < M - 1. The row number is indicated with n that is an integer satisfying 0 < n < N - 1.

The color image 711 and the depth image 701 include, for example, the same number of pixels. More specifically, the number of measurement points corresponding to the respective pixels in the color image 711 matches the number of measurement points corresponding to the respective pixels in the depth image 701. A pixel at the pixel position (m, n) in the color image 711 corresponds to the same measurement point as a pixel at the pixel position (m, n) in the depth image 701. The pixel value of the pixel at the pixel position (m, n) in the color image data 710 corresponds to the same measurement point as the pixel value of the pixel at the pixel position (m, n) in the depth image data 700. The pixel value representing the color at a measurement point included in the color image data 710 corresponds to the pixel at the same position as the pixel value representing the depth to the measurement point included in the depth image data 700.

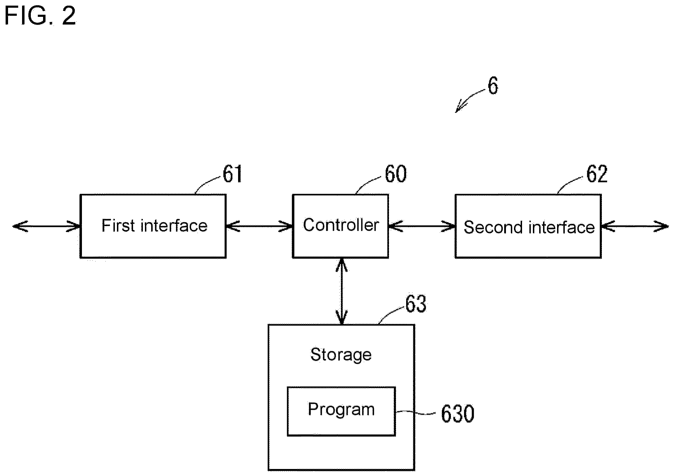

FIG. 2 is a block diagram of the information processing device 6 with an example structure. As illustrated in FIG. 2, the information processing device 6 includes, for example, a controller 60, a first interface 61, a second interface 62, and a storage 63. The information processing device 6 may be, for example, an information processing circuit. The information processing device 6 is, for example, one type of computer.

The first interface 61 can communicate with the sensor device 4. The first interface 61 may be, for example, an interface circuit. The first interface 61 may be, for example, a communicator or a communication circuit.

The first interface 61 may perform wired or wireless communication with the sensor device 4. The first interface 61 may comply with at least one communication protocol to communicate with the sensor device 4. The first interface 61 may comply with at least one communication protocol including, for example, Universal Serial Bus (USB), Inter-Integrated Circuit (I2C), Clocked Serial Interface (CSI), Serial Peripheral Interface (SPI), Wi-Fi, and Ethernet. The first interface 61 may also communicate with the sensor device 4 through the Internet.

The second interface 62 can communicate with devices external to (or more simply, external devices of) the robot system 1. The second interface 62 can communicate with at least one external device. The second interface 62 may be, for example, an interface circuit. The second interface 62 may be, for example, a communicator or a communication circuit.

The second interface 62 may perform wired or wireless communication with an external device. The second interface 62 may comply with at least one communication protocol to communicate with the external device. The second interface 62 may comply with at least one communication protocol including, for example, USB, I2C, CSI, SPI, Wi-Fi, and Ethernet. The second interface 62 may communicate with the external devices through the Internet. At least one external device with which the second interface 62 can communicate may include a display or a computer. The computer may be a server such as a cloud server, or a portable device. The portable device may be a mobile phone such as a smartphone, a tablet, a personal computer, or a wearable device. The wearable device may be a wristband or a wristwatch worn on the wrist, a headband or glasses worn on the head, or apparel worn on the body.

The controller 60 can control other components of the information processing device 6 to centrally manage the operation of the information processing device 6. The controller 60 may be, for example, a control circuit. As described in more detail below, the controller 60 includes at least one processor to provide control and processing capabilities for implementing various functions.

In various embodiments, the at least one processor may be implemented as a single integrated circuit (IC), or multiple ICs connected to one another for mutual communication, discrete circuits, or both. The at least one processor may be implemented using various known techniques.

In one embodiment, for example, the processor includes one or more circuits or units configured to follow instructions stored in an associated memory to perform one or more data computation procedures or processes. In another embodiment, the processor may be firmware (e.g., a discrete logic component) configured to perform one or more data computation procedures or processes.

In various embodiments, the processor may include one or more processors, controllers, microprocessors, microcontrollers, application-specific integrated circuits (ASICs), digital signal processors, programmable logic devices, field programmable gate arrays, combinations of any of these devices or configurations, or combinations of other known devices and configurations to implement the functions described below.

The controller 60 may include, for example, a central processing unit (CPU) as a processor. The storage 63 may include a non-transitory recording medium readable by the CPU in the controller 60, such as a read-only memory (ROM) or a random-access memory (RAM). The storage 63 stores, for example, a program 630 for controlling the information processing device 6. Various functions of the controller 60 are implemented by, for example, the CPU in the controller 60 executing the program 630 in the storage 63.

Note that the configuration of the controller 60 is not limited to the above example. For example, the controller 60 may include multiple CPUs. The controller 60 may also include at least one digital signal processor (DSP). The functions of the controller 60 may be implemented entirely or partially using hardware circuits without using software to implement the functions. The storage 63 may also include a non-transitory computer-readable recording medium other than a ROM and a RAM. The storage 63 may include, for example, a small hard disk drive and a solid-state drive (SSD).

The robot controller 5 is, for example, one type of computer, and may have the same structure as or a similar structure to the information processing device 6. The robot controller 5 can communicate with, for example, the second interface 62 in the information processing device 6. The controller 60 in the information processing device 6 generates information for robot control performed by the robot controller 5. The information generated by the controller 60 is transmitted from the second interface 62 to the robot controller 5. The robot controller 5 controls the robot 2 based on the information transmitted from the second interface 62. The robot controller 5 may also be referred to as, for example, a robot control circuit.

FIG. 3 is a block diagram of the controller 60 in the information processing device 6, illustrating example multiple blocks of functions implemented by the controller 60. The controller 60 includes, as the functional blocks, for example, an information obtainer 600, a converter 601, a generator 602, an identifier 603, a degree obtainer 604, a holding object determiner 605, and a holding posture determiner 606. Note that the functions of the information obtainer 600 may be implemented entirely or partially with hardware circuits that use no software to implement the functions. The same or a similar structure applies to the generator 602, the identifier 603, the degree obtainer 604, the holding object determiner 605, and the holding posture determiner 606.

The information obtainer 600 performs an obtaining process of obtaining the depth information 700 and the color information 710 from the sensor device 4 through a first interface 31. In the obtaining process, for example, the information obtainer 600 transmits, to the sensor device 4, obtainment instruction information instructing the sensor device 4 to obtain the depth information 700 and the color information 710 through the first interface 31. Upon receiving the obtainment instruction information, the sensor device 4 controls the depth sensor 40 and the camera 41 to capture images. In the sensor device 4, the depth sensor 40 generates the depth information 700 (in other words, the depth image data 700) based on the image data obtained by the stereo camera, and the camera 41 generates the color information 710 (in other words, the color image data 710). The sensor device 4 then transmits the depth information 700 and the color information 710 to the information processing device 6. In the information processing device 6, the depth information 700 and the color information 710 received by the first interface 61 from the sensor device 4 are input into the controller 60. Thus, in the obtaining process, the information obtainer 600 can obtain the depth information 700 and the color information 710 in response to transmitting the obtainment instruction information. The depth information 700 and the color information 710 are stored into the storage 63 through the controller 60.

The converter 601 performs a conversion process by converting the depth image data 700 obtained by the information obtainer 600 to depth image data 705. In the depth image data 705, a pixel value is greater when the depth to the corresponding measurement point is smaller. The converter 601 performs a reverse process for each of the pixel values in the depth image data 700 to generate the depth image data 705. The maximum value of the pixel value within a possible range is herein referred to as a maximum pixel value. In the reverse process, the value obtained by subtracting a pixel value included in the depth image data 700 from the maximum pixel value is the reversed pixel value. The depth image data 700 after the reverse process performed on each pixel value is the depth image data 705. When a pixel value included in the depth image data 705 is greater, the depth to the corresponding measurement point is smaller. The depth image data 705 may be hereafter referred to as depth information 705.

The generator 602 performs filtering on the depth information 705 obtained by the converter 601 based on the size of the objects 10 (or more simply, an object size), and generates high-position information 720 indicating a high portion of the multiple objects 10 at a higher position than another portion of other objects 10 on the tray 13. The high portion is, for example, a portion of the object group 10A at a higher position than surrounding portions. When an object 10 of the objects 10 includes a portion at a higher position than the surrounding portions, the portion is included in the high portion. The portion of the object group 10A at a higher position than the surrounding portions can also be referred to as a portion of the object group 10A closer to the depth sensor 40 than the surrounding portions. The portion of the object group 10A at a higher position than the surrounding portions may or may not be the highest portion of the object group 10A.

Among the multiple objects 10 on the tray 13, any object 10 including a portion included in the high portion is referred to as a candidate object 10. The candidate object 10 includes a portion at a higher position than the other portions. The high portion indicated by the high-position information 720 includes a portion of at least one of the candidate objects 10 at a higher position than the other portions. In other words, the high portion includes a portion of at least one of the candidate objects 10 at a higher position than surrounding portions.

A portion of one candidate object 10 at a higher position than the other portions may be hereafter referred to as an object high portion. The high portion indicated by the high-position information 720 may be referred to as an overall high portion. The overall high portion includes the object high portion of at least one of the candidate objects 10. When the overall high portion includes the object high portions of multiple candidate objects 10, the object high portion of one candidate object 10 included in the overall high portion is also referred to as a partial high portion.

Unless otherwise specified, in the robot system 1 described below, the overall high portion includes the object high portions of multiple candidate objects 10. In other words, multiple candidate objects 10 are on the tray 13 in the robot system 1 described below.

The identifier 603 identifies, for each of the multiple candidate objects 10, an object image of the candidate object 10 in the captured image of the measurement space 100 based on the high-position information 720. For example, the identifier 603 identifies, based on the high-position information 720, the object image of the candidate object 10 in the color image 711 represented by the color image data 710 obtained by the information obtainer 600. The object image identified by the identifier 603 may be hereafter referred to as an identified object image.

The degree obtainer 604 calculates, for each of the multiple candidate objects 10, the degree of holdability of the candidate object 10 based on the depth information 705 and the identified object image of the candidate object 10. The degree of holdability of the candidate object 10 may be hereafter referred to as the degree of holdability. The degree of holdability refers to the degree of holdability for the robot 2 to hold the candidate object 10.

The holding object determiner 605 determines, based on the degree of holdability of each of the multiple candidate objects 10, the holding object 10 among the multiple candidate objects 10 to be held by the robot 2. The holding posture determiner 606 determines the holding posture of the robot 2 relative to the holding object 10 based on the identified object image of the holding object 10. More specifically, the holding posture determiner 606 determines the posture of the robot 2 holding the holding object 10 based on the identified object image of the holding object 10. For example, the holding posture determiner 606 identifies, based on the identified object image, the position and the orientation of the holding object 10 in the measurement space 100. The holding posture determiner 606 determines, based on the identified position and orientation of the holding object 10, the holding posture of the robot 2 relative to the holding object 10. For example, when the end-effector 21 of the robot 2 grips the object 10 with two fingers, the holding posture determiner 606 determines, as the holding posture, the direction in which the end-effector 21 grips the holding object 10 with the two fingers, for example. The controller 60 provides the holding posture determined by the holding posture determiner 606 to the robot controller 5 through the second interface 62.

The robot controller 5 controls the robot 2 based on the provided holding posture. More specifically, the robot controller 5 controls the arm 20 and the end-effector 21 of the robot 2 to cause the robot 2 to hold the holding object 10 in the provided holding posture. The robot 2 can thus hold, among the multiple objects 10 on the tray 13, the object 10 easy to hold and including a portion at a higher position than the other portions. The robot controller 5 then controls the robot 2 to place the holding object 10 onto the tray 14.

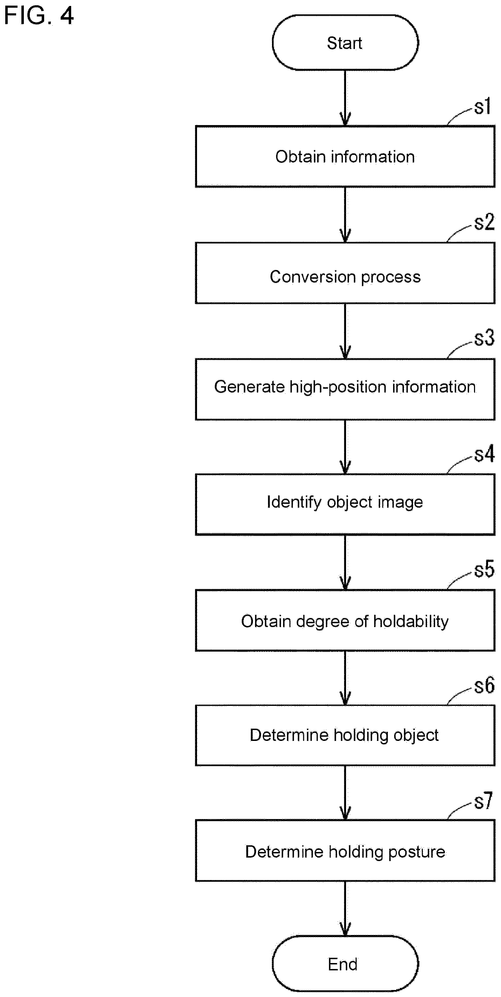

FIG. 4 is a flowchart of an example holding posture determination process in which the holding posture of the robot 2 relative to the object 10 is determined based on the depth information 700 and the color information 710. The controller 60 repeatedly performs the holding posture determination process.

In the holding posture determination process, the information obtainer 600 first obtains, in step s1, the depth information 700 and the color information 710 from the sensor device 4. In step s2, the converter 601 performs the conversion process of converting the depth information 700 to the depth information 705. In step s3, the generator 602 performs the filtering on the depth information 705 based on the object size to generate the high-position information 720. In step s4, the identifier 603 identifies, based on the high-position information 720, the object image of each of the multiple candidate objects 10 in the color image 711 indicated by the color information 710. In step s5, the degree obtainer 604 calculates, based on the depth information 705 and the identified object image of each of the multiple candidate objects 10, the degree of holdability of each of the multiple candidate objects 10. In step s6, the holding object determiner 605 determines, based on the degree of holdability of each of the multiple candidate objects 10, a holding object 10 among the multiple candidate objects 10. In step s7, the holding posture determiner 606 determines the holding posture of the robot 2 relative to the holding object 10 based on the identified object image of the holding object 10.

After step s7, the robot 2 holds the holding object 10 on the tray 13 and transfers the holding object 10 to the tray 14 as described above. The holding posture determination process illustrated in FIG. 4 is performed again to determine the holding posture of the robot 2 relative to another holding object 10. The holding posture determination process is then performed upon every transfer of the holding object 10 on the tray 13 to the tray 14.

Note that when one object image alone is identified in step s4, or in other words, when one candidate object 10 alone is on the tray 13, steps s5 and s6 may be eliminated. In this case, in step s7, the holding posture determiner 606 may determine the holding posture of the robot 2 relative to the object 10 in the object image based on the object image identified in step s4.

The information processing device 6 may be implemented by a cloud server. In this case, the information processing device 6 may communicate with the robot controller 5 through the Internet. The control unit 60 in the information processing device 6 may also function as the robot controller 5. In this case, the information processing device 6 functions as the robot control system 3. The robot controller 5 may be implemented by a cloud server. In this case, the robot 2 may include a communicator connected to the Internet, and the robot controller 5 may control the robot 2 through the Internet. The robot control system 3 may eliminate the sensor device 4. The robot control system 3 may include multiple robot controllers 5. At least a part of the holding posture determination process illustrated in FIG. 4 may be performed by the robot controller 5. For example, the robot controller 5 may perform the processing in step s7.

The sensor device 4 may generate the depth information 705 and transmit the depth information 705 to the information processing device 6. This structure eliminates the converter 601, and allows the generator 602 and the degree obtainer 604 to use the depth information 705 obtained by the information obtainer 600.

As described above, the information processing device 6 performs, based on the object size, the filtering on the depth information 705 indicating the depth in the measurement space 100 including the multiple objects 10 to generate the high-position information 720 indicating the high portion of the object group 10A at a higher position than the other portions. In this manner, the high-position information 720 is generated using the object size to appropriately identify the high portion of the object group 10A at a higher position than the other portions based on the high-position information 720.

Operation examples of the generator 602, the identifier 603, the degree obtainer 604, and the holding object determiner 605 will now be described in detail.

### Operation Example of Generator

The generator 602 performs, for example, the filtering on a depth image 706 indicated by the depth information 705 (in other words, the depth image data 705) using at least one space filter function based on the object size to perform a generation process to generate the high-position information 720. The high-position information 720 is, for example, image data representing the depth image 706 after the filtering. The image indicated by the high-position information 720 (specifically, the depth image 706 after the filtering) may be hereafter referred to as a high-position image. The high-position information 720 may be referred to as high-position image data 720.

The high-position image represents the high portion of the object group 10A at a higher position than the other portions. The high-position information 720 includes the pixel values of multiple pixels in the high-position image. The high-position information 720 associates, for each of the multiple pixels in the high-position image indicated by the high-position information 720, pixel position information indicating the position of the pixel with the pixel value of the pixel.

The multiple pixels in the high-position image correspond to the respective measurement points in the measurement space 100. The pixel value of a pixel in the high-position image corresponds to the measurement point corresponding to the pixel. The pixel values included in the high-position information 720 represent the degree by which the respective measurement points are at a higher position than the other measurement points. For example, the pixel values included in the high-position information 720 represent the degree by which the respective measurement points are at a higher position than the surrounding measurement points. A greater pixel value included in the high-position information 720 indicates that the corresponding measurement point is at a higher position than the other measurement points.

The number of pixels in the high-position image matches, for example, the number of pixels in the color image 711 and the number of pixels in the depth image 706. The pixel at the pixel position (m, n) in the high-position image corresponds to the same measurement point as the pixel at the pixel position (m, n) in the color image 711. The pixel value of the pixel at the pixel position (m, n) in the high-position image data 720 corresponds to the same measurement point as the pixel value of the pixel at the pixel position (m, n) in the color image data 710. The pixel at the pixel position (m, n) in the high-position image corresponds to the same measurement point as the pixel at the pixel position (m, n) in the depth image 706. The pixel value of the pixel at the pixel position (m, n) in the high-position image data 720 corresponds to the same measurement point as the pixel value of the pixel at the pixel position (m, n) in the depth image data 705.

In the example described below, pixels at the same pixel position in multiple images correspond to one another. For example, the pixel at the pixel position (m, n) in the high-position image, the pixel at the pixel position (m, n) in the depth image 706, and the pixel at the pixel position (m, n) in the color image 711 correspond to one another. The pixel values of pixels at the same pixel position in multiple images correspond to one another. For example, the pixel value of the pixel at the pixel position (m, n) in the high-position image, the pixel value of the pixel at the pixel position (m, n) in the depth image 706, and the pixel value of the pixel at the pixel position (m, n) in the color image 711 correspond to one another. The pixel value representing the degree by which a measurement point is at a higher position than the other measurement points in the high-position information 720, the pixel value representing the depth to the measurement point in the depth information 705, and the pixel value representing the color at the measurement point in the color information 710 correspond to one another.

A first partial image (or a first area) that is a part of an image corresponding to a second partial image (or a second area) that is a part of another image indicates that the pixel positions of multiple pixels in the first partial image (or the first area) match the respective pixel positions of multiple pixels in the second partial image (or the second area). For example, when the first partial image that is a part of the high-position image corresponds to the second partial image that is a part of the depth image, the pixel positions of multiple pixels in the first partial image match the respective pixel positions of multiple pixels in the second partial image.

The pixels in the depth image 706 may be referred to as first pixels. The pixel values of the first pixels may be referred to as first pixel values. The pixels in the high-position image may be referred to as second pixels. The pixel values of the second pixels may be referred to as second pixel values. The pixels in the color image 711 may be referred to as third pixels. The pixel values of the third pixels may be referred to as third pixel values.

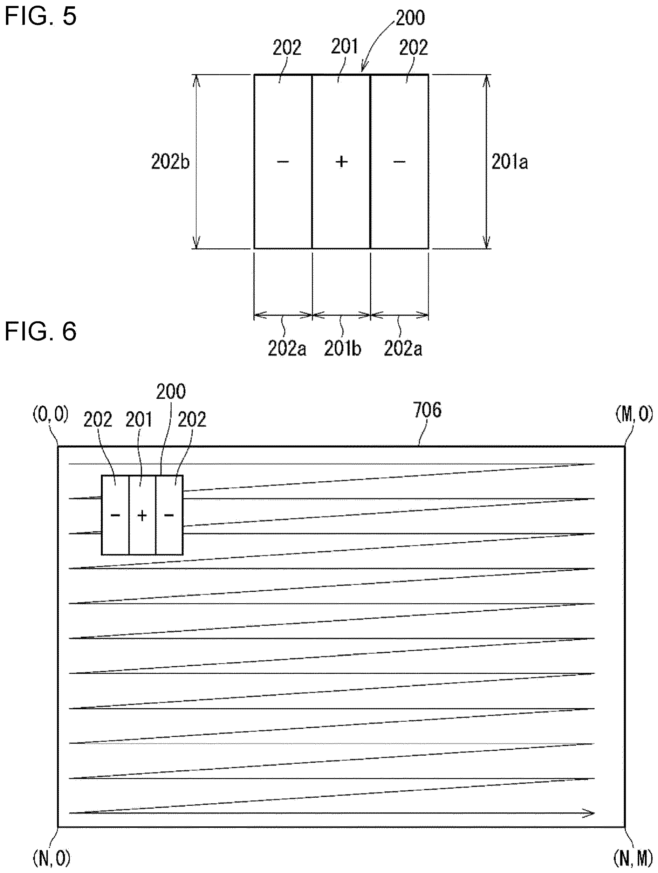

FIG. 5 is a schematic diagram of an example of a filter window 200 of a first space filter function used in the generation process. FIG. 6 is a schematic diagram of the filter window 200 being set on the depth image 706 represented by the depth image data 705 in an example.

In the generation process, the generator 602 determines one of the multiple first pixels in the depth image 706 as a first target pixel. The generator 602 then sets the filter window 200 on the depth image 706 to include the first target pixel (refer to FIG. 6). The generator 602 performs a predetermined arithmetic operation on the pixel values of the multiple first pixels in the filter window 200, and performs unit filtering to calculate a second pixel value corresponding to the pixel value (also referred to as a first target pixel value) of the first target pixel in the high-position image. In the generation process, the generator 602 shifts the first target pixel by one pixel at a time in the depth image 706 and performs the unit filtering upon each shift of the first target pixel by one pixel. More specifically, the generator 602 shifts the filter window 200 on the depth image 706 by one pixel at a time and performs the unit filtering upon each shift of the filter window 200 by one pixel to calculate multiple second pixel values in the high-position information 720 corresponding to the respective multiple first pixel values included in the depth information 705.

As illustrated in FIG. 5, the filter window 200 includes, for example, a positive partial window 201 and two negative partial windows 202. The positive partial window 201 (also referred to as a positive window 201) is a partial filter window with which the pixel value of each pixel in the area of the positive partial window 201 is multiplied by a predetermined positive value. The negative partial windows 202 (also referred to as negative windows 202) are each a partial filter window with which the pixel value of each pixel in the area of the negative partial window 202 is multiplied by a predetermined negative value. The positive partial window 201 has, for example, a rectangular profile. Each of the negative partial windows 202 has, for example, a rectangular profile. The positive partial window 201 and the two negative partial windows 202 are, for example, aligned in one direction. The positive partial window 201 is between the two negative partial windows 202. The predetermined positive value is, for example, +1.0. The predetermined negative value is, for example, -0.5.

The direction in which the positive partial window 201 and the negative partial windows 202 are aligned is hereafter referred to as a window alignment direction. A direction perpendicular to the window alignment direction is referred to as a window perpendicular direction. The same or a similar structure applies to other types of filter windows described later.

The window alignment direction and the window perpendicular direction of the filter window 200 are aligned respectively with the row direction and the column direction of the depth image 706 on which the filter window 200 is set. The size of the filter window 200 in each of the window alignment direction and the window perpendicular direction is the size of multiple pixels. In the example in FIG. 5, the sizes of filter window 200 in the window alignment direction and the window perpendicular direction are the same, and the filter window 200 has a square profile. Note that the sizes of filter window 200 in the window alignment direction and the window perpendicular direction may be different from each other. More specifically, the size of the filter window 200 in the window alignment direction may be larger or smaller than the size of the filter window 200 in the window perpendicular direction.

The positive window 201 has a size 201a in the window alignment direction and a size 201b in the window perpendicular direction, each being the size of multiple pixels. Each of the negative windows 202 has a size 202a in the window alignment direction and a size 202b in the window perpendicular direction, each being the size of multiple pixels. In the unit filtering, the generator 602 sets, for example, the filter window 200 on the depth image 706 to include the first target pixel at the center of the positive window 201. In the unit filtering, the generator 602 then multiplies each of the pixel values of the first pixels including the first target pixel in the positive window 201 by the predetermined positive value. The generator 602 then calculates the sum total of the first pixel values multiplied by the predetermined positive value as a positive sum total value. The positive sum total value is a positive value. In the unit filtering, the generator 602 also multiplies each of the pixel values of the first pixels in the negative windows 202 by a negative value. The generator 602 then calculates the sum total of the first pixel values multiplied by the predetermined negative value as a negative sum total value. The negative sum total value is a negative value. The generator 602 calculates the negative sum total value for each of the two negative partial windows 202. The generator 602 then calculates, in the unit filtering, the sum total of the positive sum total value and the two negative sum total values as a calculated value. The generator 602 uses the calculated value as a second pixel value corresponding to the first target pixel value in the high-position image data 720. When the calculated value is a negative value, the generator 602 sets the second pixel value corresponding to the first target pixel value to zero. Thus, the second pixel value in the high-position image is zero or greater. Note that a negative calculated value may be used as the second pixel value without being set to zero.

In this manner, in the unit filtering, the filter window 200 is set on, for example, the depth image 706 to include the first target pixel and multiple first pixels around the first target pixel. The predetermined arithmetic operation is performed on the pixel values of the first target pixel and the multiple first pixels around the first target pixel to calculate the second pixel value corresponding to the first target pixel value. Such unit filtering is repeatedly performed with the position of the first target pixel being changed, thus providing the pixel values of the multiple pixels in the high-position image. The first space filter function is a function representing such a process.

In the generation process, the position of the first target pixel shifts, for example, in the direction of raster scanning. In other words, the filter window 200 shifts, for example, in the direction of raster scanning on the depth image 706. The generation process includes, for example, first unit filtering in which the first pixel at the pixel position (0, 0) on the depth image 706 is the first target pixel. In second unit filtering, the first target pixel shifts by one pixel in the row direction, and the first pixel at the pixel position (1, 0) is the first target pixel. The unit filtering is then performed upon every shift of the first target pixel by one pixel in the row direction. When the first pixel at the pixel position (M, 0) is the first target pixel, the first pixel at the pixel position (M, 1) is the next first target pixel. When the first target pixel shifts by one pixel in the row direction, the first pixel at the pixel position (M, 1) is the first target pixel. The first pixel at the pixel position (M, 2) is then the next first target pixel. In the same manner or in a similar manner, once the position of the first target pixel shifts and the unit filtering is performed with the first pixel at the pixel position (M, N) as the first target pixel, all the pixel values of the multiple pixels in the high-position image are obtained, and the generation process ends.

The size of the positive window 201 corresponds, for example, to the object size. For example, the size 201a in the window alignment direction and the size 201b in the window perpendicular direction of the positive window 201 each correspond to the object size. More specifically, the size 201a in the window alignment direction and the size 201b in the window perpendicular direction each correspond to the size of the object 10 in a specific direction. For example, the size 201a in the window alignment direction may correspond to the size of the object 10 in a width direction, a depth direction, or a height direction. The size 201b in the window perpendicular direction may correspond to the size of the object 10 in the width direction, the depth direction, or the height direction. Note that the size in the width direction may be replaced with the size in a lateral direction or the size in a longitudinal direction. The size in the depth direction may be replaced with the size in a vertical direction or in a transverse direction. The size in the height direction may be replaced with the size in a thickness direction.

The size 201a in the window alignment direction and the size 201b in the window perpendicular direction correspond to, for example, the size of the object 10 in the image captured with the cameras 40a or the camera 41 in the sensor device 4. More specifically, the size of the object 10 in the image captured with the cameras 40a or the camera 41 in the sensor device 4 is used as the size 201a in the window alignment direction and the size 201b in the window perpendicular direction.

A representative orientation of the object 10 on the tray 13 is referred to as a reference orientation, and the captured image of the object 10 (referred to as a reference object 10) in the reference orientation on the tray 13 captured with the cameras 40a or the camera 41 is referred to as a reference captured image. The size 201a in the window alignment direction and the size 201b in the window perpendicular direction each match, for example, the size of the reference object 10 in the reference captured image. More specifically, the size 201a in the window alignment direction and the size 201b in the window perpendicular direction each match the size of the reference object 10 in a specific direction in the reference captured image. For example, the size 201a in the window alignment direction may match the size of the reference object 10 in the width direction in the reference captured image, the size of the reference object 10 in the depth direction in the reference captured image, or the size of the reference object 10 in the height direction in the reference captured image. The size 201b in the window perpendicular direction may match the size of the reference object 10 in the width direction in the reference captured image, the size of the reference object 10 in the depth direction in the reference captured image, or the size of the reference object 10 in the height direction in the reference captured image.

the size 201a in the window alignment direction and the size 201b in the window perpendicular direction may be different or the same. For example, when the sizes are different, the size 201a in the window alignment direction may match the size of the reference object 10 in the depth direction in the reference captured image, and the size 201b in the window perpendicular direction may match the size of the reference object 10 in the width direction in the reference captured image.

The size of each of the negative windows 202 corresponds to the object size, in the same manner as or in a similar manner to the size of the positive partial window 201. For example, in the same manner as or in a similar manner to the size of the positive window 201, the size 202a in the window alignment direction and the size 202b in the window perpendicular direction of each of the negative windows 202 each correspond to the object size.

The size 202a in the window alignment direction and the size 202b in the window perpendicular direction each correspond to, for example, the size of the reference object 10 in the reference captured image, in the same manner as or in a similar manner to the size 201a in the window alignment direction and the size 201b in the window perpendicular direction. The size 202a in the window alignment direction may match the size of the reference object 10 in the width direction in the reference captured image, the size of the reference object 10 in the depth direction in the reference captured image, or the size of the reference object 10 in the height direction in the reference captured image. The size 202b in the window perpendicular direction may match the size of the reference object 10 in the width direction in the reference captured image, the size of the reference object 10 in the depth direction in the reference captured image, or the size of the reference object 10 in the height direction in the reference captured image. The size 202a in the window alignment direction and the size 202b in the window perpendicular direction may be the same or different.

The size corresponding to the object size may match, as in the above example, or may not match the size of the reference object 10 in the reference captured image. The size corresponding to the object size may be greater than or equal to 1/2 times or less than or equal to twice the size of the reference object 10 in the reference captured image.

The size 202a in the window alignment direction of each of the negative windows 202 may match, as in the example in FIG. 5, or may not match the size 201a in the window alignment direction of the positive window 201. The size 202b in the window perpendicular direction of each of the negative windows 202 may match, as in the example in FIG. 5, or may not match the size 201b in the window perpendicular direction of the positive window 201.

The sizes 202a in the window alignment direction of the two negative windows 202 may match, as in the example in FIG. 5, or may not match each other. The sizes 202b in the window perpendicular direction of the two negative windows 202 may match, as in the example in FIG. 5, or may not match each other.

The size 201a in the window alignment direction based on the object size may be prestored in the storage 63 in the information processing device 6. The size 201a in the window alignment direction may be input into the information processing device 6 by a user. When the information processing device 6 includes an input section that receives a user input, the user may directly input the size 201a in the window alignment direction into the information processing device 6. When an external device includes an input device that receives a user input, the user may input the size 201a in the window alignment direction into the information processing device 6 through the input device. The controller 60 in the information processing device 6 or the robot controller 5 may determine the size 201a in the window alignment direction. In this case, for example, the controller 60 or the robot controller 5 may calculate the size of the reference object 10 in the reference captured image based on image data representing the reference captured image obtained by the cameras 40a or the camera 41 and determine the size 201a in the window alignment direction based on the calculated size. The controller 60 or the robot controller 5 may calculate, without using the image data, the size of the reference object 10 in the reference captured image based on computer aided design (CAD) data representing the profile of the object 10 and characteristic data from the cameras 40a or the camera 41 and determine the size 201a in the window alignment direction based on the calculated size. The calculation of the size 201a in the window alignment direction described above may be applied to the size 201b in the window perpendicular direction, the size 202a in the window alignment direction, and the size 202b in the window perpendicular direction.

The above filter window 200 is used to generate the high-position information 720 appropriately indicating the high portion of the object group 10A. This will be described in detail below.

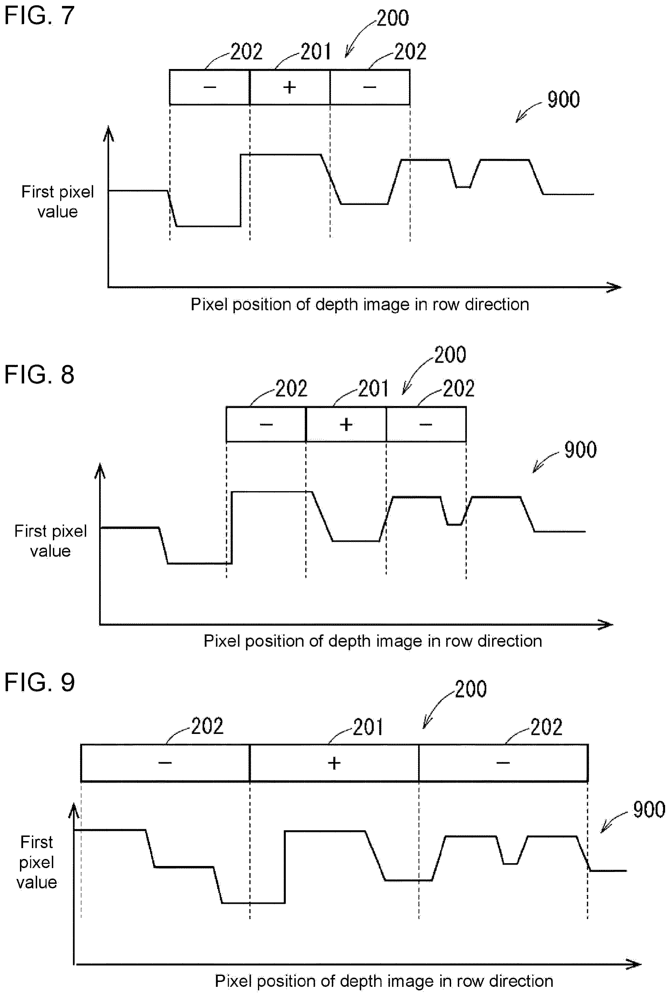

FIGs. 7 and 8 are schematic diagrams describing examples of the unit filtering. FIGs. 7 and 8 each show a graph 900 representing the relationship between the pixel positions in a target row, which is a row in the depth image 706, and the pixel values (in other words, the first pixel values) of pixels at the pixel positions. In the graph 900, the horizontal axis indicates the position of each pixel in the target row in the depth image 706, and the vertical axis indicates the first pixel value. In FIG. 7, the filter window 200 set on an area in the depth image 706 including a part of the target row is aligned with the horizontal axis of the graph 900.

As described above, in the robot control system 3, the cameras 40a in the depth sensor 40 captures images from above the tray 13. As described above, the depth to the measurement point on the surface of the object in the measurement space 100 is the depth from the depth sensor 40 to the measurement point. Thus, the measurement point at a greater depth is a measurement point at a smaller height from a bottom end of the measurement space 100 when viewed from the depth sensor 40. Thus, the first pixel value in the depth image 706 may also indicate the height of the corresponding measurement point. More specifically, the depth image 706 represents the height of each measurement point, and the depth information 705 indicates the height of each measurement point. In the same manner or in a similar manner, the depth information 700 also indicates the height of each measurement point. In the depth image 706, when the first pixel value is greater, the depth to the corresponding measurement point is smaller. Thus, a greater first pixel value indicates a greater height of the corresponding measurement point.

In the depth image 706, a partial image corresponding to the object high portion of the overall high portion, or a partial image corresponding to the portion at a higher position than the other portions in one of the candidate objects 10, may be hereafter referred to as a first high-portion corresponding object image. The candidate object 10 includes the multiple measurement points corresponding to the respective multiple pixels in the first high-portion corresponding object image. With a greater first pixel value indicating a greater height of the corresponding measurement point, the first pixel values in the first high-portion corresponding object image are greater than the first pixel values in portions surrounding the first high-portion corresponding object image. In the graph 900 in FIG. 7, the curve representing the first pixel values includes areas with greater values than the surrounding areas. The areas with greater values indicate the first pixel values of the first high-portion corresponding object image. A line connecting the points indicating the first pixel values in the graph 900 represents the shape of the surface of the object group 10A viewed from the depth sensor 40.

As described above, the filter window 200 is set, for example, on the depth image 706 to include the first target pixel at the center of the positive window 201. In the example in FIG. 7, the filter window 200 is set to allow the first target pixel to be included in the first high-portion corresponding object image. In the example in FIG. 7, the measurement point corresponding to the first target pixel is at a higher position than the other measurement points. In contrast, in the example in FIG. 8, the filter window 200 is set not to include the first target pixel in the first high-portion corresponding object image. In the example in FIG. 8, the measurement point corresponding to the first target pixel is not at a higher position than the other measurement points. The measurement point at a higher position than the other measurement points may be hereafter referred to as a high-position measurement point.

In the example in FIG. 7, the absolute value of the positive sum total value based on the positive window 201 is relatively large. The absolute value of the negative sum total value based on the negative window 202 is not relatively large. The calculated value that is the sum total of the positive sum total value and the two negative sum total values is thus a positive value. Thus, the pixel value of the second pixel in the high-position image corresponding to the first target pixel included in the first high-portion corresponding object image is a positive value.

In contrast, in the example in FIG. 8, the absolute value of the positive sum total value based on the positive window 201 is relatively small. The absolute value of the negative sum total value based on the negative window 202 is relatively large. The calculated value that is the sum total of the positive sum total value and the two negative sum total values is thus a negative value. Thus, the pixel value of the second pixel in the high-position image corresponding to the first target pixel not included in the first high-portion corresponding object image is zero.

Note that when the filter window 200 is set on a partial image in the depth image 706 corresponding to a portion of the object group 10A with a uniform height, the calculated value is, for example, zero.

FIG. 9 is a schematic diagram describing an example of unit filtering performed when the size of the positive window 201 and the size of the negative window 202 do not correspond to the object size and are too large. In the example in FIG. 9, as in the example in FIG. 7, the filter window 200 is set to include the first target pixel in the first high-portion corresponding object image. In the example in FIG. 9, the positive window 201 includes the image surrounding the first high-portion corresponding object image including the first target image. The absolute value of the positive sum total value is thus less than the absolute value in the example in FIG. 7. The negative window 202 includes the first pixel with a large first pixel value. The absolute value of the negative sum total value based on the negative window 202 is thus greater than the absolute value in the example in FIG. 7. Thus, the calculated value is less than the calculated value in the example in FIG. 7. For example, the calculated value is a negative value. Thus, unlike in the example in FIG. 7, the pixel value of the second pixel corresponding to the first target pixel included in the first high-portion corresponding object image of the depth image is small.

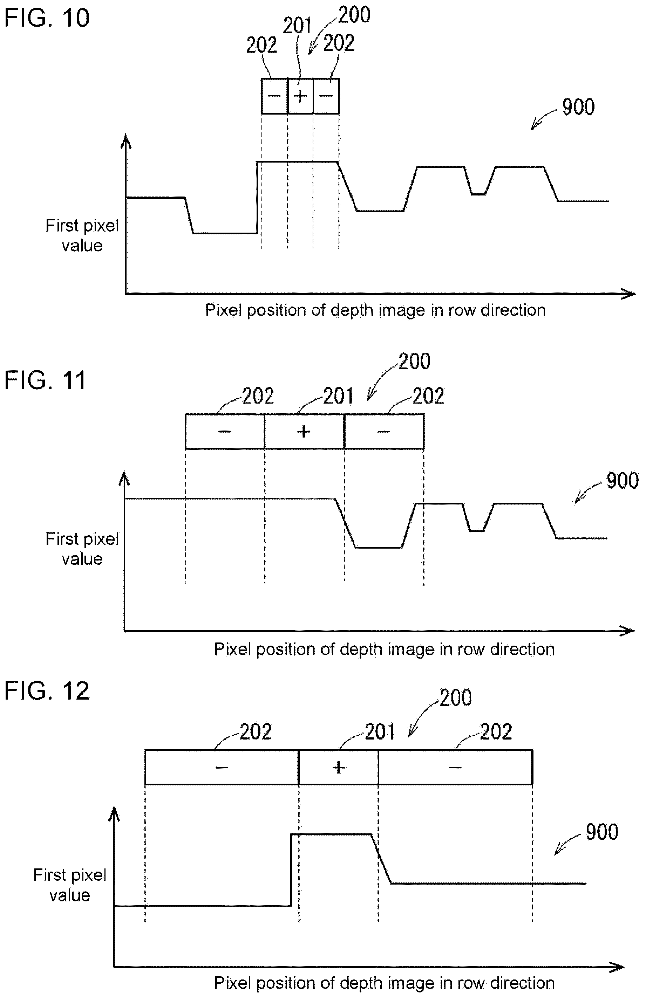

FIG. 10 is a schematic diagram describing an example of unit filtering performed when the size of the positive window 201 and the size of the negative window 202 do not correspond to the size of the object and are too small. In the example in FIG. 10, as in the example in FIG. 7, the filter window 200 is set to include the first target pixel in the first high-portion corresponding object image. In the example in FIG. 10, the positive window 201 does not include the image surrounding the first high-portion corresponding object image including the first target image. The absolute value of the positive sum total value is thus large as in the example in FIG. 7. In contrast, the negative windows 202 each include the first pixel of the first high-portion corresponding object image including the first target pixel value, and thus the absolute value of the negative sum total value based on the negative window 202 is greater than the absolute value in the example in FIG. 7. Thus, the calculated value is less than the calculated value in the example in FIG. 7. Thus, unlike in the example in FIG. 7, the pixel value of the second pixel corresponding to the first target pixel included in the first high-portion corresponding object image of the depth image is small.

As in the examples in FIGs. 7 and 8, when the size of the positive window 201 corresponds to the object size, the size of the positive window 201 can be approximated to the size of the first high-portion corresponding object image of the depth image. Thus, as in the example in FIG. 7, when the first target pixel is included in the first high-portion corresponding object image, the absolute value of the positive sum total value based on the positive window 201 tends to be large, and the absolute value of the negative sum total value based on the negative window 202 tends to be small. Thus, the calculated value tends be large. When the first target pixel is included in the first high-portion corresponding object image, the pixel value of the second pixel in the high-position image corresponding to the first target pixel tends to be large. When the first target pixel is included in the first high-portion corresponding object image, the measurement point corresponding to the first target pixel is at a higher position than the other measurement points. Thus, when the measurement point on the object 10 is at a higher position than the other measurement points, the second pixel value corresponding to the measurement point tends to be large.

In contrast, as in the example in FIG. 8, when the first target pixel is not included in the first high-portion corresponding object image, the absolute value of the positive sum total value tends to be small, and at least one of the absolute values of the two negative sum total values tends to be large. Thus, the calculated value tends to be small. When the first target pixel is not included in the first high-portion corresponding object image, the measurement point corresponding to the first target pixel is not at a position higher than the other measurement points. Thus, when the measurement point on the object 10 is not at a position higher than the other measurement points, the second pixel value corresponding to the measurement point tends to be small.

As described above, in the high-position image data 720, the second pixel value corresponding to the high-position measurement point tends to be large. In contrast, the second pixel value corresponding to the measurement point that is not the high-position measurement point tends to be small. In other words, the second pixel value of the measurement point differs based on whether the measurement point is higher than the other measurement points. The high-position information 720 can thus appropriately indicate the portion of the object group 10A at a higher position than the other portions. Thus, the high portion can be appropriately identified based on the high-position information 720. For example, a partial image with the second pixel value greater than or equal to a threshold in the high-position image indicated by the high-position information 720 is an image (also referred to as a second high-position corresponding image) corresponding to the high portion of the object group 10A. In the second high-position corresponding image in the high-position image, a continuous area including multiple pixels consecutively arranged may be identified. The identified continuous area may be set as an image (also referred to as a second high-portion corresponding object image) corresponding to the object high portion of one of the candidate objects 10. Thus, the high portion of each object can be individually identified with the high-position information 720.

When the first target pixel is included in the first high-portion corresponding object image and when the size of each of the negative windows 202 does not correspond to the object size and is too large, as in the example in FIG. 9, the negative window 202 tends to include a pixel with a large first pixel value. When the first high-portion corresponding object image includes the first target pixel, the absolute value of the negative sum total value tends to be large, and thus the calculated value tends to be small. Thus, the measurement point corresponding to the first target pixel may not be identified as the high-position measurement point.

In contrast, when the size of the negative window 202 corresponds to the object size, as in the example in FIG. 7, the negative window 202 tends not to include a pixel with a large first pixel value. When the first high-portion corresponding object image includes the first target pixel, the absolute value of the negative sum total value does not tend to be large, and thus the calculated value does not tend to be small. This allows the measurement point corresponding to the first target pixel to be easily identified as the high-position measurement point.

When the size of the negative window 202 is too small, the negative window 202 includes fewer pixels. In this case, when the pixel value of a specific pixel in the negative window 202 includes large noise, an error in the negative sum total value may increase. When the error in the negative sum total value increases, the error in the calculated value increases. Thus, the measurement point corresponding to the first target pixel may not be identified as the high-position measurement point.

In contrast, when the size of the negative window 202 corresponds to the object size, the error in the negative sum total value can be small with the large noise included in the pixel value of the specific pixel in the negative window 202. This can reduce the error in the pixel value of the second pixel corresponding to the first target pixel. This allows the measurement point corresponding to the first target pixel to be easily identified as the high-position measurement point.

When the positive window 201 is between the two negative windows 202, the object high portion with a space on opposite side of the object in the surroundings can be identified with the high-position information 720. This will be described below.

In the measurement space 100, a direction corresponding to the window alignment direction of the filter window 200 set on the depth image is referred to as a filter direction. In the measurement space 100, directions corresponding to the row direction and the column direction of the depth image are respectively referred to as an x-direction and a y-direction. As in the example in FIG. 6, when the window alignment direction is aligned with the row direction of the depth image, the filter direction is aligned with the x-direction.

In the example in FIG. 7, partial images with a small first pixel value are on the opposite sides in the window alignment direction of the first high-portion corresponding object image including the first target image. Thus, spaces including no object are on the opposite sides in the filter direction of the object high portion (also referred to as a target object high portion) corresponding to the first high-portion corresponding object image including the first target pixel. When the filter window 200 is set as illustrated in FIG. 7 with the positive window 201 between the two negative windows 202, the pixel value of the second pixel corresponding to the first target pixel is large.

In contrast, in the example in FIG. 11, a partial image with a small first pixel value is on one side (e.g., on the right) alone of the first high-portion corresponding object image including the first target pixel. In this case, a space is on one side of the target object high portion alone. When the filter window 200 is set as illustrated in FIG. 11, the absolute value of the negative sum total value based on the left negative window 202 is large. Thus, the pixel value of the second pixel corresponding to the first target pixel is small.

In this manner, the pixel value of the second pixel corresponding to the first target pixel differs between when partial images with a small first pixel value are on the opposite sides in the window alignment direction of the first high-portion corresponding object image including the first target pixel and when a partial image with a small first pixel value is on one side alone in the window alignment direction of the first high-portion corresponding object image including the first target pixel. More specifically, the pixel value of the second pixel corresponding to the first target pixel differs between when the spaces are on the opposite sides of the target object high portion in the filter direction and when the space is on one side of the target object high portion in the filter direction. Thus, the threshold for comparison with the second pixel value may be appropriately set to allow, with the high-position information 720, easy identification of the object high portion with spaces on the opposite sides at least in the filter direction. As in the example in FIG. 5, when the filter direction is aligned with the x-direction corresponding to the row direction in the depth image in the measurement space 100, the object high portion with spaces on the opposite sides at least in the x-direction can be easily identified with the high-position information 720. This reduces the likelihood of interference between the candidate object 10 including the object high portion identified with the high-position information 720 and the end-effector 21. The end-effector 21 can thus, for example, easily grip the candidate object 10 including the object high portion identified with the high-position information 720 from the opposite sides in the filter direction.

Note that the filter window 200 may eliminate one of the two negative windows 202. In this case, the object high portion with a space on one side at least in the filter direction can be easily identified with the high-position information 720.

When the filter window 200 is used in the above manner, the size of the space surrounding the object high portion identified with the high-position information 720 is determined based on the size 202a in the window alignment direction of the negative window 202. For example, when the size 202a in the window alignment direction of the right negative window 202 is large, the space on the right in the filter direction of the object high portion identified with the high-position information 720 is large. In other words, when the size 202a in the window alignment direction of the right negative window 202 is large, the object high portion with a large space on the right in the filter direction is identified with the high-position information 720. The size 202a in the window alignment direction of the negative window 202 can be adjusted to obtain the high-position information 720 reflecting the size of the space surrounding the object high portion. This will be described below.

When the size 202a in the window alignment direction of each of the negative windows 202 is large, as illustrated in FIG. 12, partial images with a small first pixel value on the opposite sides in the window alignment direction of the first high-portion corresponding object image including the first target pixel reduce the likelihood that the first pixel with a large first pixel value to be included in each of the negative windows 202. More specifically, partial images with a small first pixel value on the opposite sides in the window alignment direction of the first high-portion corresponding object image including the first target pixel allow the pixel value of the second pixel corresponding to the first target pixel to be large although the size 202a of the negative window 202a in the window alignment direction is large. In other words, in the measurement space 100, large spaces on the opposite sides in the filter direction of the target object high portion allow the pixel value of the second pixel corresponding to the first target pixel to be large although the size 202a in the window alignment direction is large. Thus, when the negative window 202 with a large size 202a in the window alignment direction is used, a measurement point with a large corresponding second pixel value is used as the high-position measurement point to identify, with the high-position information 720, the object high portion with large spaces on the opposite sides in the filter direction. In contrast, when the negative window 202 with a small size 202a in the window alignment direction is used, the object high portion with small spaces on the opposite sides in the filter direction is identified with the high-position information 720.

Note that when the size 202a in the window alignment direction of the left negative window 202 is large and the size 202a in a lateral alignment direction of the right negative window 202 is small, the object high portion with a large space on the left in the filter direction and a small space on the right in the filter direction is identified with the high-position information 720.

In this manner, the size 202a in the window alignment direction of the negative window 202 is adjusted to adjust the size of the space surrounding the object high portion identified with the high-position information 720. For example, when the size 202a in the window alignment direction is set to the size corresponding to the object size as in the above example, the high-position information 720 can be used to identify the object high portion with the size of the surrounding space corresponding to the object size.

Note that when the end-effector 21 grips the object 10 with multiple fingers, the size 202a in the window alignment direction of the negative window 202 may correspond to the thickness of the fingers of the end-effector 21. In this case, the size 202a in the window alignment direction of the negative window 202 may match, in the same manner as or in a similar manner to the above example, the thickness of the fingers of the end-effector 21 on the image captured with the cameras 40a or the camera 41. This allows obtainment of the high-position information 720 for identifying the object high portion with the size of the surrounding space corresponding to the thickness of the fingers of the end-effector 21. Thus, the object 10 grippable by the end-effector 21 with the multiple fingers can be determined as the holding object 10.

### Example Operation of Identifier

The identifier 603 that identifies the object image of the candidate object 10 in the color image 711 binarizes, for example, the high-position image indicated by the high-position information 720 to generate a binarized image. For example, the identifier 603 converts, among the second pixel values of the multiple second pixels in the high-position image, a second pixel value greater than or equal to the threshold to 1 and changes a second pixel value less than the threshold to 0. This converts the high-position image to the binarized image. An area with the pixel value 1 in the binarized image corresponds to the high portion of the object group 10A. In the binarized image, the area with the pixel value 1 is hereafter referred to as a high-value area, and the area with the pixel value 0 is hereafter referred to as a low-value area.

The identifier 603 identifies continuous areas each including multiple pixels consecutively arranged and included in the high-value area corresponding to the overall high portion. The continuous areas may also be referred to as independent areas or island areas. The multiple continuous areas included in the high-value area correspond to the respective object high portions in the multiple candidate objects 10. In the high-position image, an area corresponding to a continuous area in the binarized image corresponds to an object high portion and is the second high-portion corresponding object image. The identifier 603 can identify the multiple continuous areas included in the high-value area by, for example, labeling the high-value area with four connections or eight connections.

The identifier 603 identifies, in each of the identified continuous areas, a partial image corresponding to the identified continuous area in the color image 711. The identifier 603 then identifies the identified partial image as an object image of the candidate object 10. Thus, in the color image 711, a partial image corresponding to the continuous area corresponding to the object high portion of the candidate object 10 is identified as the object image of the candidate object 10. The partial image corresponding to the continuous area in the color image 711 corresponds to a partial image (also referred to as a third high-portion corresponding object image) corresponding to the object high portion (in other words, a partial high portion that is a part of the high portion) in the color image 711. Thus, the third high-portion corresponding object image included in the color image 711 is the object image of the candidate object 10. The third high-portion corresponding object image includes the object high portion at least partially included in the candidate object 10, and thus the object image includes at least a part of the candidate object 10.

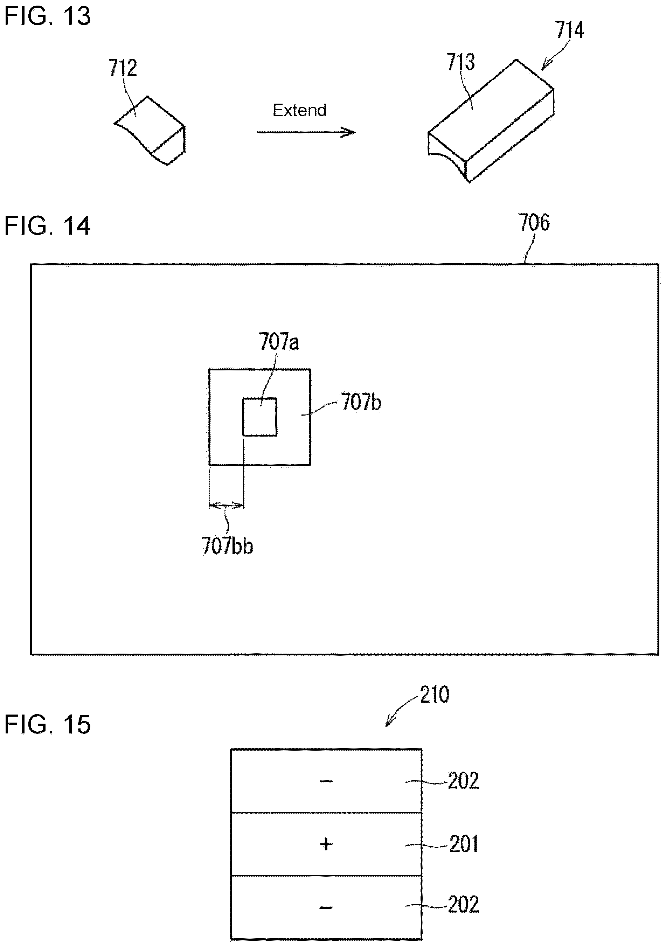

Note that the identifier 603 may identify the area in the color image 711 extended from the third high-portion corresponding object image as an object image. FIG. 13 is a schematic diagram of an example range 713 that is extended from a third high-portion corresponding object image 712 and identified as an object image 714 in the color image 711. FIG. 13 illustrates, in its left portion, an example of the third high-portion corresponding object image 712. FIG. 13 illustrates, in its right portion, the range 713 extended from the third high-portion corresponding object image 712 illustrated in its left portion.

For example, each of the multiple objects 10 may have a different color. In this case, the identifier 603 may identify the range 713 extended from the third high-portion corresponding object image 712 as the object image 714 based on the color information of the measurement space 100. For example, the identifier 603 may identify the range 713 extended from the third high-portion corresponding object image 712 as the object image 714 based on the color image data 710. In this case, the identifier 603 identifies, for example, in the color image 711, an area continuous with the third high-portion corresponding object image 712 and having the same color as the third high-portion corresponding object image 712. The identifier 603 then identifies the range 713 extended from the third high-portion corresponding object image 712 to the identified area as the object image 714. More specifically, the identifier 603 identifies a range obtained by adding the identified area to the third high-portion corresponding object image 712 as the object image 714. This increases the size of the candidate object 10 in the object image.

The identifier 603 may also identify the range 713 extended from the third high-portion corresponding object image 712 as the object image 714 based on an edge image of the measurement space 100. In this case, the identifier 603 performs, for example, edge detection on the color image 711 of the measurement space 100 to generate the edge image of the measurement space 100. A method for generating the edge image may be, for example, a Sobel method, a Laplacian method, or a Canny method. The identifier 603 then identifies a portion of the edge image (also referred to as a corresponding portion edge image) corresponding to the third high-portion corresponding object image 712. The identifier 603 then identifies, in the edge image, based on the corresponding portion edge image, the range extended to the edge (area in which the luminance changes by a large degree) corresponding to the outline of the candidate object 10. The identifier 603 then identifies a portion corresponding to the identified range in the color image 711 as the range 713 extended from the third high-portion corresponding object image 712 based on the edge image. The range 713 is then identified as the object image 714.

### Operation Example of Degree Obtainer

One of the multiple candidate objects 10 is herein referred to as a target candidate object 10.

The degree obtainer 604 may calculate, for example, an evaluation value representing the ease of holding the target candidate object 10, and use the calculated evaluation value as the degree of holdability of the target candidate object 10. The evaluation value can be calculated with various approaches. For example, the degree obtainer 604 specifies, in the depth image 706, a partial image (also referred to as an object corresponding image) corresponding to the identified object image including an image of the target candidate object 10. The degree obtainer 604 then calculates an average value or a maximum value of the pixel values of the multiple first pixels in the identified object corresponding image. The average value and the maximum value of the object corresponding image are respectively referred to as a first average value and a first maximum value. The degree obtainer 604 may use the first average value or the first maximum value as the evaluation value. A greater first pixel value in the depth image 706 indicates that the corresponding measurement point is at a higher position. Thus, a greater first average value or a greater first maximum value indicates that the target candidate object 10 is easier to hold.

As illustrated in FIG. 14, the degree obtainer 604 may identify, in the depth image 706, a partial image 707b (also referred to as a surrounding partial image 707b) surrounding an object corresponding image 707a, and calculate the average value or the maximum value of the pixel values of the multiple first pixels in the identified surrounding partial image 707b. The average value and the maximum value of the surrounding partial image 707b are respectively referred to as a second average value and a second maximum value. The degree obtainer 604 may use, as the evaluation value, a difference value obtained by subtracting one of the second average value or the second maximum value from one of the first average value or the first maximum value. A greater difference value indicates that the candidate object 10 is at a higher position than the surrounding objects, thus indicating that the target candidate object 10 is easier to hold.

When the end-effector 21 grips the object 10 with the multiple fingers, a width 707bb of the surrounding partial image 707b may be a size corresponding to the thickness of the fingers of the end-effector 21. In this case, the width 707bb may match the thickness of the fingers of the end-effector 21 on the image captured with the cameras 40a or the camera 41. This increases the degree of holdability of the candidate object 10 having a surrounding space to receive the fingers of the end-effector 21, allowing the candidate object 10 to be easily gripped with the fingers of the end-effector 21. Note that although the surrounding partial image 707b surrounds the object corresponding image 707a in the example in FIG. 14, the surrounding partial image 707b may not surround the object corresponding image 707a.

The degree obtainer 604 may identify the size of the space surrounding the target candidate object 10 based on the depth image 706 and determine the evaluation value based on the identified size. In this case, for example, the degree obtainer 604 increases the evaluation value for a larger space surrounding the target candidate object 10. The degree obtainer 604 can identify, for example, a range with small first pixel values surrounding the object corresponding image 707a in the depth image 706 to identify the size of the space surrounding the target candidate object 10.

### Operation Example of Holding Object Determiner

The holding object determiner 605 determines, for example, the candidate object 10 with the highest degree of holdability among the multiple candidate objects 10 as the holding object 10. When multiple candidate objects 10 have the highest degree of holdability, the holding object determiner 605 may determine the holding object 10 based on other information. For example, the holding object determiner 605 calculates, for each of the multiple candidate objects 10 with the highest degree of holdability, an exposed area of the candidate object 10 based on the identified object image of the candidate object 10. The degree obtainer 604 may then determine that the candidate object 10 with the largest exposed area is the holding object 10 among the multiple candidate objects 10 with the highest degree of holdability.

The robot system 1 described above is not limited to the above examples. Other examples of the robot system 1 will now be described.

### Another Operation Example of Generator

The generator 602 may perform the filtering on the depth image 706 using multiple space filter functions corresponding to the object size to generate the high-position information 720. For example, the generator 602 may perform the filtering on the depth image 706 using the first space filter function described above and a second space filter function corresponding to the object size to generate the high-position information 720. FIG. 15 is a schematic diagram of an example filter window 220 in the second space filter function.

The filter window 220 includes, for example, in the same manner as or in a similar manner to the filter window 200, the positive window 201 and the two negative windows 202. Unlike the filter window 200, the window alignment direction and the window perpendicular direction of the filter window 220 are respectively aligned with the column direction and the row direction of the depth image 706.

The generator 602 performs, in the same manner as or a similar manner to the above example, the filtering on the depth image using the filter window 200. The depth image filtered using the filter window 200 is herein referred to as a first filter image. The generator 602 also performs, in the same manner as or in a similar manner to using the filter window 200, the filtering on the depth image using a filter window 210. The filtered depth image is referred to as a second filter image. The generator 602 then sets a composite image being a combination of the first filter image and the second filter image as the high-position image. The generator 602 sets, for example, the sum of the pixel value of the pixel at the pixel position (m, n) in the first filter image and the pixel value of the pixel at the pixel position (m, n) in the second filter image as the pixel value of the pixel at the pixel position (m, n) in the composite image. The generator 602 performs this process for each pixel position to generate the composite image.

In this manner, the high-position information 720 is generated using the multiple filter windows including the positive window 201 and the negative windows 202 with different alignment directions. This allows the object high portion to be easily identified with the high-position information 720 when a space is included in any of the multiple directions in the surroundings of the object high portion. In other words, the object high portion with a space in at least one of the multiple directions in the surroundings is to be identified easily using the high-position information 720. This allows easier identification of the object 10 that is easier to hold. When the filter windows 200 and 210 are used, the object high portion with a space in at least one of the x-direction or the y-direction in the surroundings is easily identified with the high-position information 720.

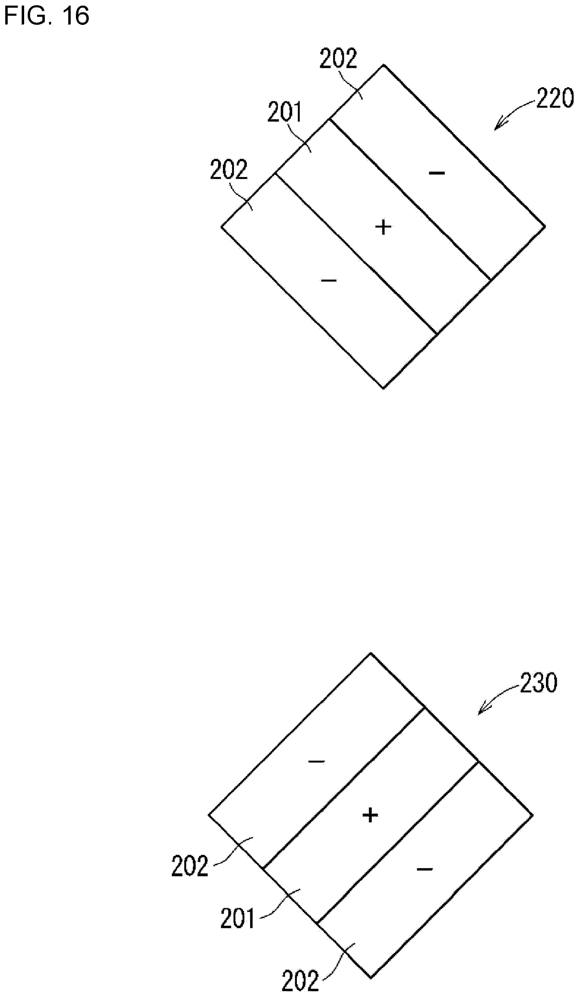

Although the two different space filter functions are used to generate the high-position information 720 in the above example, three or more space filter functions may be used. FIG. 16 is a schematic diagram of an example filter window 220 in a third space filter function and an example filter window 230 in a fourth space filter function.

The filter windows 220 and 230 each include, in the same manner as or in a similar manner to the filter windows 200 and 210, the positive window 201 and the two negative windows 202. The window alignment direction of the filter window 220 is obliquely rightward in the depth image 706. The window alignment direction of the filter window 230 is obliquely leftward in the depth image 706.

The generator 602 generates, when using the filter windows 200, 210, 220, and 230, the first filter image and the second filter image as described above. The generator 602 also performs the filtering on the depth image using the filter window 220. The depth image after the filtering is referred to as a third filter image. The generator 602 also performs the filtering on the depth image using the filter window 230. The depth image after the filtering is referred to as a fourth filter image. The generator 602 then sets a composite image being a combination of the first filter image, the second filter image, the third filter image, and the fourth filter image as the high-position image. The generator 602 sets, for example, the sum of the pixel value of the pixel at the pixel position (m, n) in the first filter image, the pixel value of the pixel at the pixel position (m, n) in the second filter image, the pixel value of the pixel at the pixel position (m, n) in the third filter image, and the pixel value of the pixel at the pixel position (m, n) in the fourth filter image as the pixel value of the pixel at the pixel position (m, n) in the composite image. The generator 602 performs this process for each pixel position to generate the composite image. The high-position information 720 indicating the high-position image generated in this manner allows the object high portion with a space in at least one of the four directions in the surroundings to be identified easily.

Note that the generator 602 may use five or more filter windows with different window alignment directions to generate the high-position information 720. The generator 602 may use at least one of the filter windows 200, 210, 220, or 230 to generate the high-position information 720.

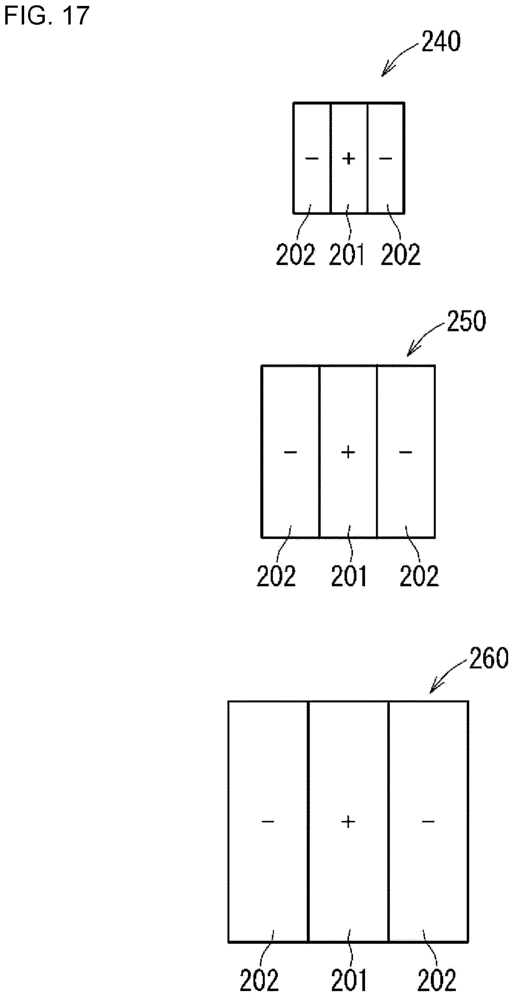

The generator 602 may use multiple space filter functions corresponding to the sizes of the object 10 in multiple directions to generate the high-position information 720. FIG. 17 is a schematic diagram of example filter windows in the multiple space filter functions corresponding to the sizes of the object 10 in the multiple directions. FIG. 17 illustrates a filter window 240 in the space filter function corresponding to the size of the object 10 in the height direction, a filter window 250 in the space filter function corresponding to the size of the object 10 in the depth direction, and a filter window 260 in the space filter function corresponding to the size of the object 10 in the width direction. In the example illustrated in FIG. 17, the sizes in the width direction, the depth direction, and the height direction of the object 10 are larger in the stated order.

The filter windows 240, 250, and 260 each have the same structure as or a similar structure to the filter window 200. The size in the window alignment direction and the size in the window perpendicular direction of the positive window 201 and the negative windows 202 of the filter window 240 correspond to the size of the reference object 10 in the height direction in the reference captured image. The size in the window alignment direction and the size in the window perpendicular direction of the positive window 201 and the negative window 202 of the filter window 250 correspond to the size of the reference object 10 in the depth direction in the reference captured image. The size in the window alignment direction and the size in the window perpendicular direction of the positive window 201 and the negative window 202 of the filter window 260 correspond to the size of the reference object 10 in the width direction in the reference captured image.

The generator 602 prepares a depth image (also referred to as a fifth filter image) filtered using the filter window 240, a depth image (also referred to as a sixth filter image) filtered using the filter window 250, and a depth image (also referred to as a seventh filter image) filtered using the filter window 260. The generator 602 then generates, in the same manner as or in a similar manner to the above example, a composite image being a combination of the fifth filter image, the sixth filter image, and the seventh filter image, and sets the generated composite image as the high-position image.

In this manner, the high-position information 720 is generated with multiple space filter functions corresponding to the respective sizes of the object 10 in the multiple directions. This allows the high portion of the object group 10A to be easily identified independently of varied orientations of the objects 10 in the object group 10A on the tray 13. In other words, independently of appearance of each object 10 in the object group 10A viewed from the sensor device 4, the high portion of the object group 10A can be identified easily. In other words, independently of the manner of each object 10 imaged in the image captured with the cameras 40a and 41, the high portion of the object group 10A can be identified easily. This allows the object 10 that is easy to hold to be identified easily. The end-effector 21 can thus hold the object 10 easily.

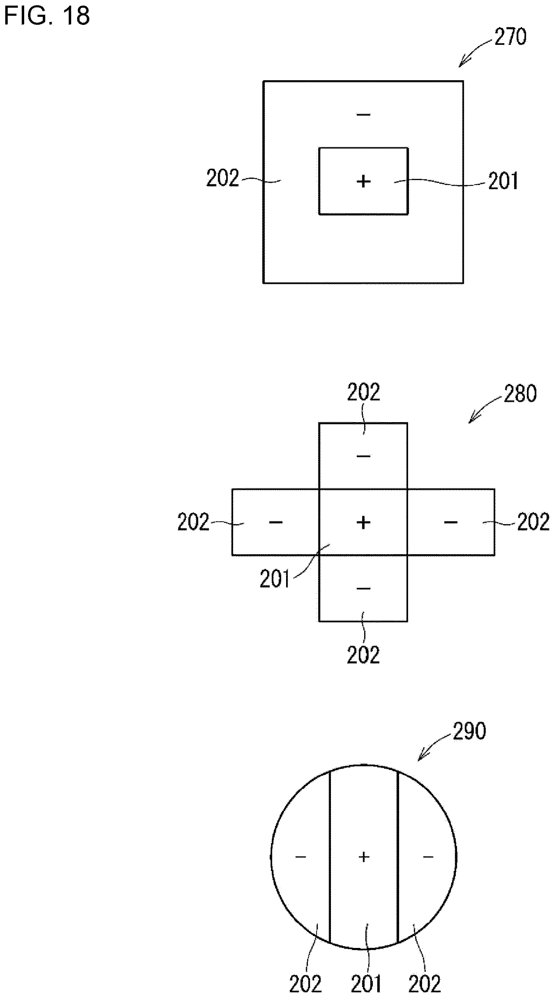

The filter window used by the generator 602 may have a structure different from the structure described in the above example. The filter windows in at least one of the space filter functions used by the generator 602 may include a filter window 270 illustrated in an upper portion of FIG. 18, a filter window 280 illustrated in a middle portion of FIG. 18, or a filter window 290 illustrated in a lower portion of FIG. 18. The filter window 270 includes the positive window 201 surrounded by the negative window 202. When the filter window 270 is used, the object high portion with a space in all surrounding directions is identified easily. The filter window 280 includes the negative windows 202 upward, downward, rightward, and leftward from the positive window 201. When the filter window 280 is used, the object high portion with a space in the x-direction and the y-direction in the surroundings is identified easily. The filter window 290 has a circular profile. Note that the filter window may have a profile other than a rectangle or a circle.

The positions of the multiple negative partial windows 202 in the filter window may be determined based on the positions of the fingers of the end-effector 21 of the robot 2. For example, for the end-effector 21 for holding the object 10 with two fingers from opposite sides, the multiple negative partial windows 202 in the filter window may be located as in the filter window 200 in FIG. 5, the filter window 210 in FIG. 15, or the filter window 290 in FIG. 18. For the end-effector 21 that grips the object 10 with four or more fingers from the surroundings of the object 10, the multiple negative partial windows 202 in the filter window may be located as in the filter window 280 in FIG. 18 or the filter window 270 in FIG. 18.

The predetermined positive value for the positive window 201 may be other than +1.0, and the predetermined negative value for the negative windows 202 may be other than -0.5.

Although the pixel values of the multiple first pixels in the positive window 201 are multiplied by the predetermined positive value in the above example, the predetermined positive value may be added to the pixel values. In this case, the predetermined negative value may be added to the pixel values of the multiple first pixels in the negative window 202.

In the filter window, the positive window 201 may be changed to the negative window 202, and the negative window 202 may be changed to the positive window 201. When such a change is performed in the example in FIG. 5, the negative window 202 is between two positive windows 201. When the positive window 201 is changed to the negative window 202, and the negative window 202 is changed to the positive window 201, in the high-position image data 720, the second pixel value corresponding to a measurement point at a higher position than the other measurement points tends to be small, and the second pixel value corresponding to a measurement point not at a higher position than the other measurement points tends to be large. Thus, a partial image with the second pixel value that is less than the threshold in the high-position image indicated by the high-position information 720 is the image (in other words, the second high-position corresponding image) corresponding to the high portion of the object group 10A.

Although multiple filter images corresponding to the respective multiple filter windows are combined in the above example, the filter images may not be combined. In this case, in the holding posture determination process illustrated in FIG. 4, a filter image may be generated using one type of filter window (step s3). The generated filter image may then be used as the high-position image, and steps s4 to s7 may be performed. In step s4, when the binarized image of the high-position image does not include the high-value area, or specifically when no high portion of the object group 10A is detected, the holding posture determination process may be performed again using another type of filter window without performing steps s5 to s7. In step s4 of the holding posture determination process, when the binarized image of the high-position image does not include the high-value area, still another type of filter window may be used to perform the holding posture determination process again.

### Another Operation Example of Identifier

In the above example, the identifier 603 identifies, based on the edge image or the color information of the measurement space 100, the range extended from the third high-portion corresponding object image as the object image. The identifier 603 may identify the range extended from the third high-portion corresponding object image as the object image based on the depth information 705. This example will be described below. In the example below, the generator 602 functions as a part of the identifier 603. For example, the identifier 603 performs the filtering on the depth image 706 using two types of filter windows with the window alignment directions perpendicular to each other. The identifier 603 then identifies, based on the result of the filtering, the range extended from the third high-portion corresponding object image as the object image in the color image 711.

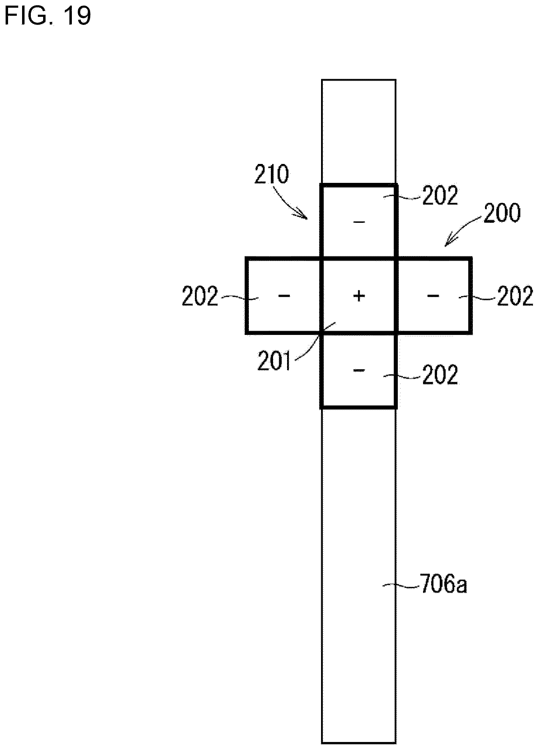

FIG. 19 is a schematic diagram describing an example operation of the identifier 603. FIG. 19 schematically illustrates an example partial image 706a included in the depth image 706 when the object 10 is an elongated object, such as a pencil. The partial image 706a represents the depth of one object 10. In the example in FIG. 19, no other objects 10 surround the object 10 corresponding to the partial image 706a. The first pixel values in the partial image 706a are greater than the first pixel values in the surrounding image.

In FIG. 19, two types of filter windows with the window alignment directions perpendicular to each other are set on a partial image 701a. More specifically, the filter window 200 and the filter window 210 are set on the partial image 701a. The size in the window alignment direction and the size in the window perpendicular direction of the positive window 201 and the negative window 202 of the filter windows 200 and 210 are set to correspond to the size of the elongated object 10 in the transverse direction. The filter windows 200 and 210 are set to include the first target pixels at the same pixel position. The window alignment direction of the filter window 200 matches, in the depth image 706, the longitudinal direction of the object 10 corresponding to the partial image 706a. The window alignment direction of the filter window 210 matches, in the depth image 706, the transverse direction of the object 10 corresponding to the partial image 706a.

For the partial image 706a representing the depth of an object 10 set with the filter windows 200 and 210 as illustrated in FIG. 19, a calculated value (also referred to as a first calculated value) that is calculated with the filter window 200 is large and a calculated value (also referred to as a second calculated value) that is calculated with the filter window 210 is small. Thus, when the difference value obtained by subtracting the second calculated value from the first calculated value is greater than or equal to a threshold, the object 10 is highly likely to extend, in the measurement space 100, in a direction (also referred to as a second filter direction) corresponding to the window alignment direction of the filter window 210.

The identifier 603 thus identifies the direction in which the object 10 in the third high-portion corresponding object image extends based on the multiple first calculated values obtained by the generator 602 using the filter window 200 to perform the filtering on the depth image 706 and the multiple second calculated values obtained by the generator 602 using the filter window 210 to perform the filtering on the depth image 706. The identifier 603 then identifies, based on the identified direction, the range extended from the third high-portion corresponding object image as the object image.

When the pixel position of the first target pixel is at the pixel position (m, n), the first calculated value obtained and the pixel position (m, n) are hereafter referred to as corresponding to each other. In the same manner or in a similar manner, when the pixel position of the first target pixel is at the pixel position (m, n), the second calculated value obtained and the pixel position (m, n) are referred to as corresponding to each other.

The identifier 603 identifies the multiple first calculated values corresponding to the multiple third pixels in the third high-portion corresponding object image using the multiple first calculated values obtained through the filtering based on the filter window 200. The first calculated values corresponding to the third pixels are the first calculated values corresponding to the same pixel positions as the pixel positions of the third pixels. The identifier 603 identifies the multiple second calculated values corresponding to the multiple third pixels in the third high-portion corresponding object image using the multiple second calculated values obtained through the filtering based on the filter window 210. The second calculated values corresponding to the third pixels are the second calculated values corresponding to the same pixel positions as the pixel positions of the third pixels.

The identifier 603 calculates a difference value between the first calculated value and the second calculated value corresponding to the same pixel position for the identified multiple first calculated values and the multiple second calculated values. This difference value is obtained by subtracting the second calculated value from the first calculated value. When the calculated multiple difference values include a difference value greater than the threshold, the identifier 603 determines that the object 10 in the third high-portion corresponding object image extends in the second filter direction. Upon determining that the object 10 in the third high-portion corresponding object image extends in the second filter direction, the identifier 603 identifies, as the object image, the range extended from the third high-portion corresponding object image in the color image 711 in the window alignment direction of the filter window 210. For example, the identifier 603 identifies, in the color image 711, an area in the window alignment direction of the filter window 210 with respect to the third high-portion corresponding object image and having a pixel value that is substantially the same as a representative pixel value in the third high-portion corresponding object image. The identifier 603 then identifies, in the color image 711, the range extended from the third high-portion corresponding object image to the identified area as the object image. The representative pixel value in the third high-portion corresponding object image may be, for example, an average value of the multiple third pixel values included in the third high-portion corresponding object image.

Note that the two types of different filter windows used in the above processing are not limited to the filter windows 200 and 210. For example, the filter windows 220 and 230 illustrated in FIG. 16 may be used.

In the robot system 1, the color image 711 may be replaced by a grayscale image. In this case, the identifier 603 may identify an object image of the candidate object 10 in the grayscale image based on the high-position information 720 in the same manner as or in a similar manner to the above example.

The holding posture determiner 606 may determine the direction in which the end-effector 21 grips the holding object 10 based on the window alignment direction of the filter window used in the holding posture determination process. For example, when the filter window 200 in FIG. 5 is used in the holding posture determination process in which the end-effector 21 grips the object 10 with two fingers, the holding posture determiner 606 may determine that the end-effector 21 is to grip the holding object 10 in a direction parallel to the filter direction corresponding to the window alignment direction of the filter window 200.

The robot controller 5 may also control the opening and closing width of the fingers of the end-effector 21 based on the size 202a in the window alignment direction of the negative window 202 in the filter window used in the holding posture determination process. For example, the robot controller 5 may increase the opening and closing width of the fingers of the end-effector 21 for a larger size 202a in the window alignment direction, and decrease the opening and closing width of the fingers of the end-effector 21 for a smaller size 202a in the window alignment direction.

Although the robot system, the robot control system, and the information processing device have been described in detail, the above structures are illustrative in all respects, and the disclosure is not limited to the above structures. All the features of the embodiments described above may be combined in use unless any contradiction arises. Many variations not specifically described above may be implemented without departing from the scope of the disclosure.

### REFERENCE SIGNS

3 robot control system
5 robot controller
6 information processing device
200, 210, 220, 230, 240, 250, 260, 270, 280, 290 filter window
201 positive partial window
202 negative partial window
600 information obtainer
602 generator
603 identifier
604 degree obtainer
605 holding object determiner
606 holding posture determiner
630 program
705 depth information
706 depth image
710 color information
711 color image
712 third high-portion corresponding object image
714 object image
720 high-position information

## Claims

1. An information processing device, comprising:
an obtainer configured to obtain depth information indicating a depth in a measurement space, the measurement space including a plurality of obj ects; and
a generator configured to generate high-position information indicating a high portion of the plurality of objects at a higher position than another portion of the plurality of objects in the measurement space by performing, on the depth information, filtering corresponding to an object size of an object of the plurality of objects.

2. The information processing device according to claim 1, wherein
the generator is configured to perform the filtering on a depth image indicated by the depth information using at least one space filter function corresponding to the object size.

3. The information processing device according to claim 2, wherein
the at least one space filter function includes a first space filter function,
the first space filter function includes a filter window including
a first partial window with which a first value is added to a pixel value of each pixel in an area of the first partial window or the pixel value of each pixel in the area of the first partial window is multiplied by the first value, and
a second partial window with which a second value having a sign different from a sign of the first value is added to a pixel value of each pixel in an area of the second partial window or the pixel value of each pixel in the area of the second partial window is multiplied by the second value, and
the first partial window has a size corresponding to the object size.

4. The information processing device according to claim 3, wherein
the second partial window has a size corresponding to the object size.

5. The information processing device according to claim 3 or claim 4, wherein
the filter window included in the first space filter function further includes a third partial window with which a third value with a same sign as the second value is added to a pixel value of each pixel in an area of the third partial window or the pixel value of each pixel in the area of the third partial window is multiplied by the third value, and
the first partial window is between the second partial window and the third partial window.

6. The information processing device according to any one of claims 3 to 5, wherein
the at least one space filter function includes a second space filter function,
the second space filter function includes a filter window including the first partial window and the second partial window, and
the first partial window and the second partial window are aligned in different directions between the first space filter function and the second space filter function.

7. The information processing device according to any one of claims 2 to 6, wherein
the object size includes a size in a first direction and a size in a second direction different from the first direction, and
the at least one space filter function includes a space filter function corresponding to the size in the first direction and a space filter function corresponding to the size in the second direction.

8. The information processing device according to any one of claims 1 to 7, further comprising:
an identifier configured to identify, for each of a plurality of candidate objects, an object image of the candidate object in a captured image of the measurement space based on the high-position information, each of the plurality of candidate objects being, among the plurality of obj ects, an object including a partial high portion included in the high portion.

9. The information processing device according to claim 8, wherein
the identifier is configured to identify, based on color information in the measurement space, an edge image of the measurement space, or the depth information, a range extended from a partial image corresponding to the partial high portion in the captured image as the object image.

10. The information processing device according to claim 8 or claim 9, further comprising:
a degree obtainer configured to calculate, based on the depth information, a degree of holdability of each of the plurality of candidate objects.

11. The information processing device according to claim 10, further comprising:
a holding object determiner configured to determine, based on the degree of each of the plurality of candidate objects, a holding object to be held by a robot among the plurality of candidate objects.

12. The information processing device according to claim 11, further comprising:
a holding posture determiner configured to determine, based on the object image, a holding posture of the robot relative to the holding object.

13. A robot control system, comprising:
the obtainer, the generator, the identifier, the degree obtainer, the holding object determiner, and the holding posture determiner included in the information processing device according to claim 12; and
a robot controller configured to control the robot based on the holding posture determined by the holding posture determiner.

14. A program for causing a computer to perform operations comprising:
obtaining depth information indicating a depth in a measurement space, the measurement space including a plurality of obj ects; and
generating high-position information indicating a high portion of the plurality of objects at a higher position than another portion of the plurality of objects in the measurement space by performing, on the depth information, filtering corresponding to an object size of an object of the plurality of objects.
